# EUROPEAN PATENT APPLICATION

(11) **EP 4 768 220 A1**
(43) Date of publication of application: **01.07.2026**
(21) Application number: 25782848.3
(22) Date of filing: 27.03.2025
(51) Int. Cl.: B29C 45/14, B29C 45/20, H01M 50/627, H01M 50/264, B29L 31/34

(54) **BATTERY MODULE RESIN INJECTION DEVICE**

(30) Priority: 01.04.2024 KR 20240044192
(71) Applicant: LG Energy Solution, Ltd., Seoul 07335 (KR)
(72) Inventor: KIM, Byungjun, Yuseong-gu, Daejeon 34122 (KR)
(74) Representative: Plasseraud IP
(86) International application number: PCT/KR2025/003962
(87) International publication number: WO 2025/211646

(57) **Abstract**

The present invention provides a structure of a resin injection apparatus for injecting a resin into a battery module having a long side and a short side in horizontal direction and an injection hole provided on a lower surface thereof, the resin injection apparatus including: a mount where the battery module is mounted in inverted state; and a nozzle provided with a nozzle hole at a front end thereof, the nozzle supplying the resin to the battery module through the injection hole while the nozzle hole is engaged with the injection hole, wherein the nozzle extends at a predetermined angle with respect to a normal direction of the lower surface of the battery module, and the nozzle hole has a long side and a short side intersecting with the long side and the short side of the battery module, respectively.

## Description

### [TECHNICAL FIELD]

This application claims the benefit of priority based on Korean Patent Application No. 10-2024-0044192 filed on April 1, 2024, entire content disclosed in the document of the patent applications is included as a part of this specification.

The present invention relates to a structure of an apparatus for injecting a resin into a battery module. More specifically, the present invention relates to a resin injection apparatus for injecting resin into a frame to adhesively fix a battery cell to the frame, and to a structure of a battery module manufactured using the same.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

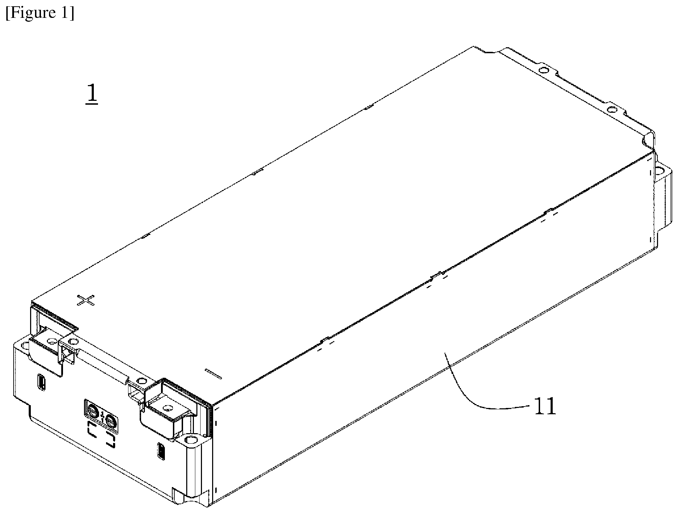

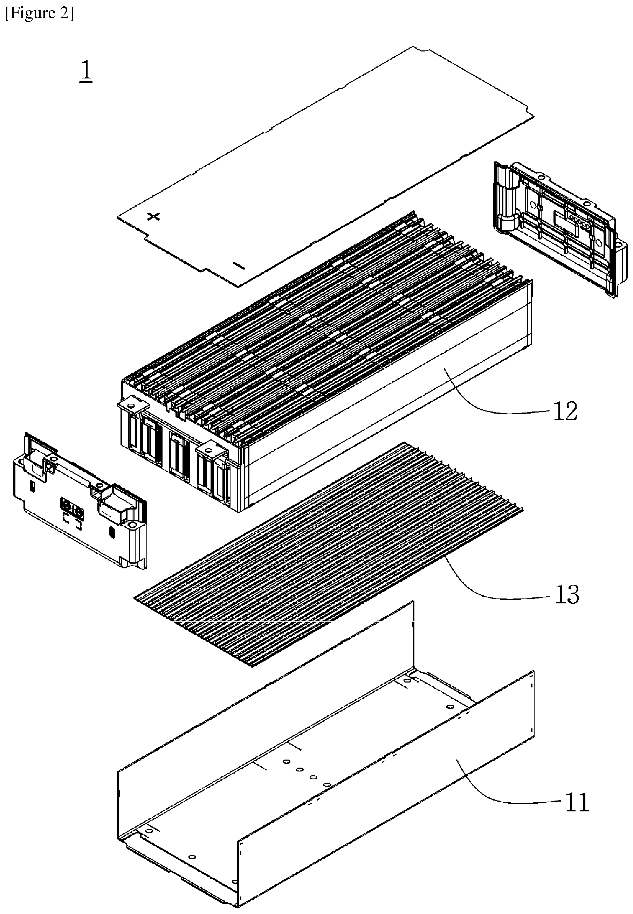

FIGS. 1 and 2 illustrate a structure of a battery module. Referring to FIGS. 1 and 2, a battery module 1 is manufactured by placing a plurality of stacked battery cells 12 in a frame 11 of metal material. As shown in FIG. 2, the frame 11 may form a box-shaped housing together with other plates covering the upper end and the front and rear ends of the battery cell 12.

A resin 13 is provided between the lower plate of the frame 11 and the lower surface of the battery cell 12. The resin 13 is applied on the lower plate, and the battery cell 12 is placed thereafter, the resin 13 is cured to adhesively fix the battery cell 12 to the frame 11. The resin 13 is made of a material with high thermal conductivity and may conduct heat generated in the battery cell 12 during charge and discharge to the frame 11 to dissipate heat.

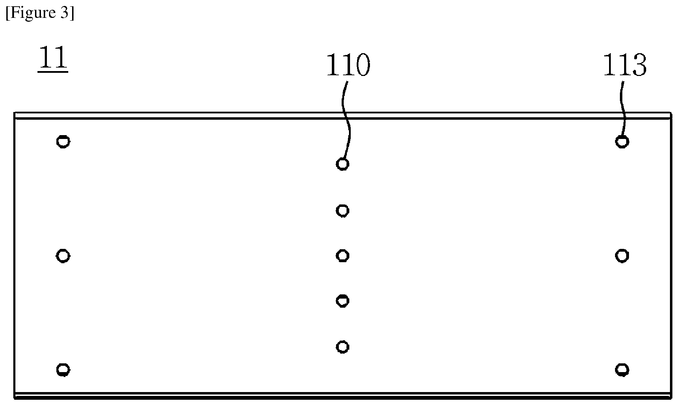

FIG. 3 illustrates a lower surface of a frame of the battery module of FIG. 1. Referring to FIG. 3, a plurality of injection holes 110 are provided in the frame 11 for injecting the resin 13. In addition, a checking hole 113 is provided in the frame 11 to inspect whether the resin 13 completely fills the space between the battery cell 12 and the frame 11. When the resin 13 is injected into the injection hole 110, it may be confirmed whether the resin fills the battery module by inspecting whether the resin 13 reaches the checking hole 113.

Meanwhile, the resin 13 has a very high viscosity even before curing such that the flow thereof is not constant and is very slow. Therefore, a problem occurs in which the resin 13 overflows from the injection hole 110 before completely filling the space between the frame 11 and the battery cell 12.

In addition, only the local arrival of the resin 13 may be confirmed through the checking hole 113. Therefore, it is difficult to guarantee that the resin 13 is uniformly and sufficiently distributed between the frame 11 and the battery cell 12.

Therefore, a resin injection apparatus capable of uniformly and quickly injecting resin into a desired space of a battery module and a structure of a battery module capable of receiving the resin are required.

### [DISCLOSURE]

### [TECHNICAL PROBLEM]

In order to solve above-described problem of prior art, it is an object of the present invention to provide a structure of a resin injection apparatus capable of quickly injecting resin into a battery module. It is also an object of the present invention to provide a structure of a resin injection apparatus that does not require excessive energy for injecting resin or cause backflow of resin.

It is another object of the present invention to provide a structure of a resin injection apparatus capable of uniformly injecting resin into a battery module.

It is yet another object of the present invention to provide a structure of a battery module into which resin may be injected using the resin injection apparatus described above.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a resin injection apparatus for injecting a resin into a battery module having a long side and a short side in horizontal direction and an injection hole provided on a lower surface thereof, the resin injection apparatus comprising: a mount where the battery module is mounted in inverted state; and a nozzle provided with a nozzle hole at a front end thereof, the nozzle supplying the resin to the battery module through the injection hole while the nozzle hole is engaged with the injection hole, wherein the nozzle extends at a predetermined angle with respect to a normal direction of the lower surface of the battery module.

According to the present invention, the resin injected into the injection hole has a higher horizontal velocity such that the resin may spread more quickly within the battery module without flowing backward. In addition, since the flow direction of the resin may be set, the injection of the resin may be performed more predictably.

The nozzle may move up and down. Here, the nozzle hole is engaged with the injection hole when the nozzle is lowered.

A plurality of nozzles may be arranged along an extending direction of the short side of the battery module. Here, a plurality of corresponding nozzle holes and a plurality of corresponding injection holes arranged in the extending direction of the short side of the battery module may also be provided.

According to the first embodiment of the present invention, the nozzle may be inclined with respect to the long side toward a first short side of the battery module. Accordingly, the resin injected by the nozzle may flow parallel to the extending direction of the long side of the battery module.

By the resin injection apparatus, after the resin is injected into the injection hole arranged along the extending direction of the short side of the battery module, the resin flows in the extending direction of the long side of the battery module to fill the space within the battery module.

The nozzle hole may have a long side and a short side. Here, the extending direction of the long side of the nozzle hole may intersect with that of the long side of the battery module, and the extending direction of the short side of the nozzle hole may intersect with that of the short side of the battery module. That is, the nozzle hole may extend in a direction intersecting the extending direction of the battery module. Accordingly, the resin flowing out of the nozzle hole may have a larger flow rate in the extending direction of the long side of the battery module than in the extending direction of the short side of the battery module.

According to the second embodiment of the present invention, the nozzle may include: a first nozzle inclined with respect to the long side toward a first short side of the battery module; and a second nozzle inclined with respect to the long side toward a second short side of the battery module. Accordingly, the first nozzle and the second nozzle may generate resin flows in opposite directions along the extending direction of the long side of the battery module.

Here, the first nozzle and the second nozzle may move up and down together, and a first nozzle hole provided in the first nozzle and a second nozzle provided in the second nozzle may be engaged with the injection hole when the first nozzle and the second nozzle are lowered.

The first nozzle and the second nozzle may be alternately arranged along an extending direction of the short side of the battery module. Here, the first nozzle hole provided in the first nozzle and the second nozzle provided in the second nozzle may be arranged along a center line of the battery module parallel to the extending direction of the short side. Accordingly, the resin may be injected so as to flow from the center of the battery module along the extending direction of the long side toward the two short sides of the battery module.

The nozzle hole may have a long side and a short side. Here, the extending direction of the long side of the nozzle hole may intersect with that of the long side of the battery module, and the extending direction of the short side of the nozzle hole may intersect with that of the short side of the battery module. That is, the nozzle hole may extend in a direction intersecting the extending direction of the battery module. Accordingly, the resin flowing out of the nozzle hole may have a larger flow rate in the extending direction of the long side of the battery module than in the extending direction of the short side of the battery module.

According to the second embodiment of the present invention, the nozzle hole has a semicircle shape with a straight portion and a curved portion. In such case, since the curved portion is longer than the straight portion, the flow rate of the resin flowing out of the nozzle hole through the curved portion is larger than that of the resin flowing out of the nozzle hole through the straight portion. Accordingly, the distribution of the flow rate of the resin injected into the injection hole may be set according to the direction, thereby allowing the resin to be injected more predictably and filling the space in the battery module more uniformly.

Here, the straight portion of the first nozzle hole may face the first short side of the battery module opposite to the curved portion of the first nozzle hole, and the straight portion of the second nozzle hole may face the second short side of the battery module opposite to the curved portion of the second nozzle hole. Accordingly, the main flows of the resin passing through the first nozzle hole and the resin passing through the second nozzle hole may be in opposite directions along the extending direction of the long side of the battery module.

The present invention also provides a structure of a resin injection apparatus for injecting a resin into a battery module having a long side and a short side in horizontal direction and an injection hole provided on a lower surface thereof, the resin injection apparatus comprising: a mount where the battery module is mounted in inverted state; and a nozzle provided with a nozzle hole at a front end thereof, the nozzle supplying the resin to the battery module through the injection hole while the nozzle hole is engaged with the injection hole, wherein the nozzle hole has a long side and a short side, an extending direction of the long side of the nozzle hole may intersect with that of the long side of the battery module, and an extending direction of the short side of the nozzle hole may intersect with that of the short side of the battery module.

According to the present invention, by setting the distribution of the flow rate of the resin injected into the injection hole according to the direction, the resin may be injected more predictably and fill the space in the battery module more uniformly.

The nozzle may move up and down. Here, the nozzle hole may be engaged with the injection hole when the nozzle is lowered.

A plurality of nozzles may be arranged along an extending direction of the short side of the battery module. Here, a plurality of corresponding nozzle holes and a plurality of corresponding injection holes arranged in the extending direction of the short side of the battery module may also be provided.

The nozzle may extend at a predetermined angle with respect to a normal direction of the lower surface of the battery module. Accordingly, the resin injected into the injection hole has a higher horizontal velocity such that the resin may spread more quickly within the battery module without flowing backward. In addition, since the flow direction of the resin may be set, the injection of the resin may be performed more predictably.

Specifically, the nozzle may be inclined with respect to the long side toward a first short side of the battery module. Accordingly, the resin injected by the nozzle may flow parallel to the extending direction of the long side of the battery module.

According to the second embodiment of the present invention, the nozzle may include: a first nozzle inclined with respect to the long side toward a first short side of the battery module; and a second nozzle inclined with respect to the long side toward a second short side of the battery module. Accordingly, the first nozzle and the second nozzle may generate resin flows in opposite directions along the extending direction of the long side of the battery module.

Here, the first nozzle and the second nozzle may move up and down together, and a first nozzle hole provided in the first nozzle and a second nozzle provided in the second nozzle may be engaged with the injection hole when the first nozzle and the second nozzle are lowered.

The first nozzle and the second nozzle may be alternately arranged along an extending direction of the short side of the battery module. Here, the first nozzle hole provided in the first nozzle and the second nozzle provided in the second nozzle may be arranged along a center line of the battery module parallel to the extending direction of the short side. Accordingly, the resin may be injected so as to flow from the center of the battery module along the extending direction of the long side toward the two short sides of the battery module.

According to the second embodiment of the present invention, the nozzle hole has a semicircle shape with a straight portion and a curved portion. In such case, since the curved portion is longer than the straight portion, the flow rate of the resin flowing out of the nozzle hole through the curved portion is larger than that of the resin flowing out of the nozzle hole through the straight portion. Accordingly, the distribution of the flow rate of the resin injected into the injection hole may be set according to the direction, thereby allowing the resin to be injected more predictably and filling the space in the battery module more uniformly.

Here, the straight portion of the first nozzle hole may face the first short side of the battery module opposite to the curved portion of the first nozzle hole, and the straight portion of the second nozzle hole may face the second short side of the battery module opposite to the curved portion of the second nozzle hole. Accordingly, the main flows of the resin passing through the first nozzle hole and the resin passing through the second nozzle hole may be in opposite directions along the extending direction of the long side of the battery module.

The present invention also provides a structure of a battery module to which a resin injection apparatus having the structure described above may be applied.

The battery module may have a long side and a short side in horizontal direction and include an injection hole provided on a lower surface thereof, wherein the injection hole may have a long side and a short side, the extending direction of the long side of the injection hole may intersect with that of the long side of the battery module, and the extending direction of the short side of the injection hole may intersect with that of the short side of the battery module. That is, the injection hole may extend in a direction intersecting the extending direction of the battery module. Accordingly, the resin flowing in through the injection hole may have a larger flow rate in the extending direction of the long side of the battery module than in the extending direction of the short side of the battery module.

According to the first embodiment of the present invention, the battery module may further include a checking hole. The checking hole may be open or transparent such that the inside of the battery module may be viewed. By inspecting whether the resin has reached the checking hole, it may be confirmed that the resin fills the space in the battery module.

Here, the injection hole may be provided so as to be offset to a first side with respect to the center of the lower surface along an extending direction of the long side of the battery module, and the checking hole may be provided so as to be offset to a second side with respect to the center of the lower surface along the extending direction of the long side of the battery module. In such case, by inspecting the checking hole, it may be confirmed whether the resin uniformly fills the battery module.

The injection hole has a semicircle shape with a straight portion and a curved portion. In such case, since the curved portion is longer than the straight portion, the flow rate of the resin flowing in from the injection hole through the curved portion is larger than that of the resin flowing in from the injection hole through the straight portion. Accordingly, the distribution of the flow rate of the resin injected into the injection hole may be set according to the direction, thereby allowing the resin to be injected more predictably and filling the space in the battery module more uniformly.

According to the second embodiment of the present invention, the injection hole may include: a first injection hole having a curved portion and a straight portion facing a first short side of the battery module opposite to the curved portion thereof; and a second injection hole having a curved portion and a straight portion facing a second short side of the battery module opposite to the curved portion thereof. Accordingly, the main flows of the resin passing through the first injection hole and the second injection hole may be in opposite directions along the extending direction of the long side of the battery module.

The first injection hole and the second injection hole may be arranged along a center line of the battery module parallel to the extending direction of the short side of the battery module. Accordingly, the resin may be injected so as to flow from the center of the battery module along the extending direction of the long side toward the two short sides of the battery module.

Here, the battery module may further include a pair of checking holes provided at two short sides of the lower surface of the battery module, respectively. In such case, by inspecting the checking hole, it may be confirmed whether the resin uniformly fills the battery module.

### [ADVANTAGEOUS EFFECTS]

The present invention may provide a structure of a resin injection apparatus capable of rapidly injecting resin into a battery module by utilizing an angle of a nozzle and/or a shape of a nozzle hole.

The resin injection apparatus according to the present invention may perform smooth resin injection without backflow with little energy.

The present invention may also provide a structure of a resin injection apparatus capable of uniformly injecting resin into a battery module by utilizing a shape of a nozzle and/or a nozzle hole.

The present invention may also provide a structure of a battery module having a checking hole and/or an injection hole into which resin may be injected using the resin injection apparatus as described above, and thus, the resin is uniformly injected, thereby reinforcing the structural and thermal connection between the battery cell and the frame.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a battery module.
FIG. 3 illustrates a lower surface of a frame of the battery module of FIG. 1.
FIGS. 4 and 5 illustrate a nozzle of the resin injection apparatus before descending, and FIG. 6 illustrates the nozzle after descending according to a first embodiment.
FIG. 7 illustrates a flow of resin according to a nozzle angle of the first embodiment.
FIG. 8 illustrates a flow rate of resin per direction according to a shape of a nozzle hole of the first embodiment.
FIG. 9 illustrates a flow of resin according to the shape of the nozzle hole of the first embodiment.
FIGS. 10 and 11 illustrate a structure of a battery module to which the resin injection apparatus according to a second embodiment is applied.
FIGS. 12 and 13 illustrate a nozzle of the resin injection apparatus before descending, and FIG. 14 illustrates the nozzle after descending according to a second embodiment.
FIG. 15 illustrates a flow of resin according to a nozzle angle of the second embodiment.
FIG. 16 illustrates a flow rate of resin per direction according to a shape of a nozzle hole of the second embodiment.
FIG. 17 illustrates a flow of resin according to the shape of the nozzle hole of the second embodiment.
FIGS. 18 and 19 illustrate a structure of a battery module to which the resin injection apparatus according to the second embodiment is applied.
FIGS. 20 and 21 illustrate a battery pack accommodating a battery module and a vehicle including the battery pack according to an embodiment of the present invention, respectively.

### [DESCRIPTION OF REFERENCE NUMERALS]

1: battery module
   11: frame
      110: injection hole
      111: first injection hole
      112: second injection hole
      113: checking hole
   12: battery cell
   13: resin
2: resin injection apparatus
   20: nozzle
      200: nozzle hole
   21: first nozzle
      210: first nozzle hole
   22: second nozzle
      220: second nozzle hole
   23: mount
A: curved portion
B: straight portion
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

The present invention provides a structure of a battery module and a resin injection apparatus capable of injecting a resin into the battery module smoothly, the battery module including a battery cell, a frame for accommodating the battery cell, and a resin injected and cured between the battery cell and the frame to adhesively fix the battery cell to the frame.

Hereinafter, preferred embodiments of the present invention will be described with reference to the accompanying drawings.

### [FIRST EMBODIMENT]

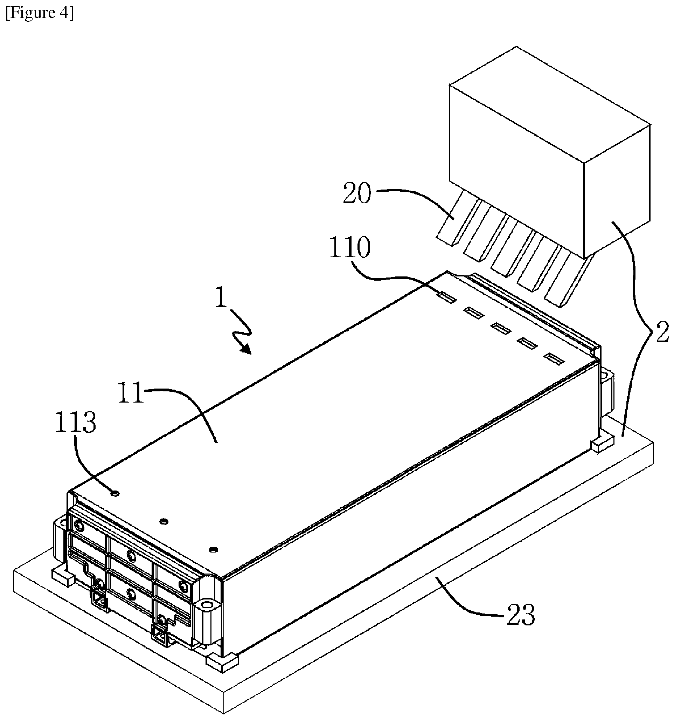

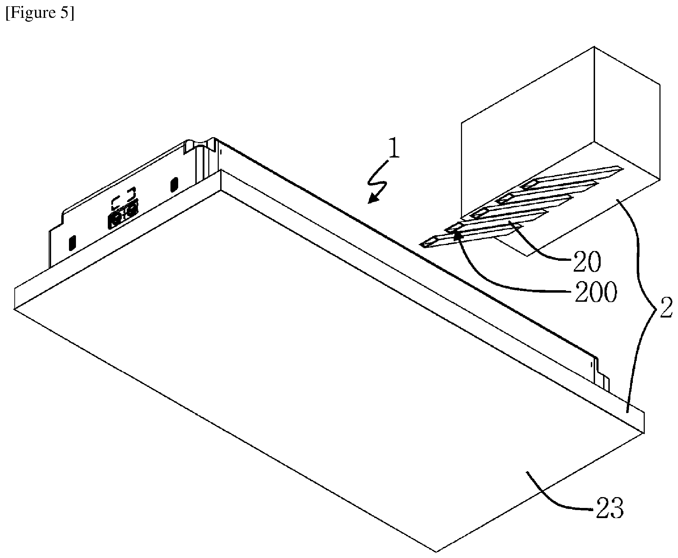

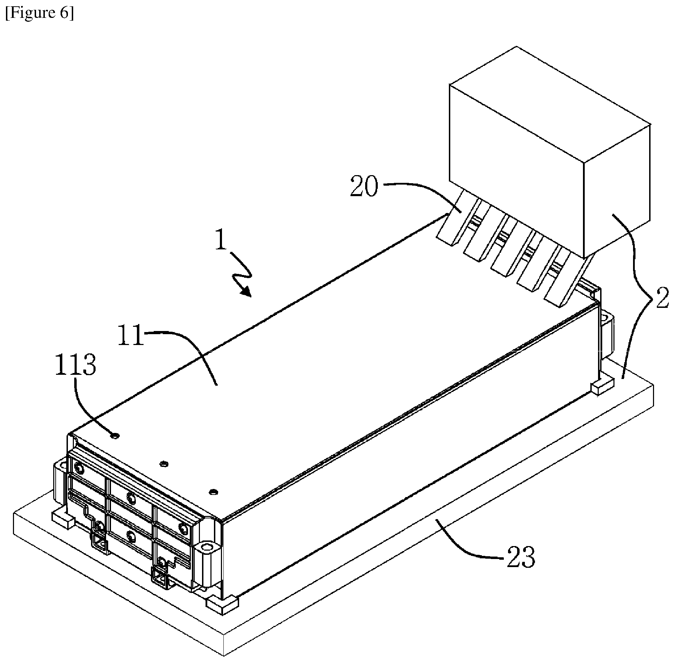

FIGS. 4 and 5 illustrate a nozzle of a resin injection apparatus before descending, and FIG. 6 illustrates the nozzle after descending according to a first embodiment. Referring to FIGS. 4 to 6, the resin injection apparatus 2 according to the first embodiment includes a nozzle 20 for injecting a resin into the frame 11 of the battery module 1 and a mount 23 for supporting the battery module 1.

The battery module 1 may have a long side and a short side in the horizontal direction.

The mount 23 may support the battery module 1 such that the battery module 1 may have an accurate relative position with respect to the nozzle 20. Here, the battery module 1 may be mounted on the mount 23 in a manner that the lower surface of the frame 11 faces upward, and thus, resin may be injected between the bottom surface of the frame 11 and the battery cell accommodated in the frame 11.

The nozzle 20 has a nozzle hole 200 at one end thereof for discharging resin.

The nozzle 20 may move up and down. As the nozzle 20 is lowered, the nozzle hole 200 may be engaged with the injection hole 110 provided in the frame 11. Thereafter, the nozzle 20 may discharge the resin through the nozzle hole 200, and the resin may be injected into the frame 11 through the injection hole 110.

A plurality of nozzles 20 may be provided. Specifically, the plurality of nozzles 20 may be arranged in the extending direction of the long side and/or the short side of the battery module 1. Here, a plurality of nozzle holes 200 and a plurality of injection holes 110 may also be provided similar to the nozzle 20.

According to the first embodiment, the plurality of injection holes 110 may be arranged near the first short side of the frame 11 along the extending direction of the short side, and the plurality of nozzles 20 may also be arranged such that the plurality of nozzle holes 200 are positioned to correspond to the plurality of injection holes 110.

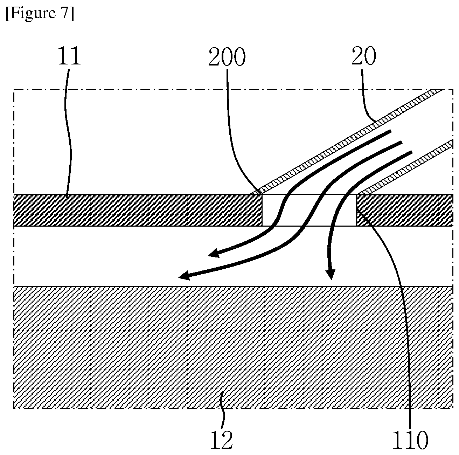

FIG. 7 illustrates a flow of resin according to a nozzle angle of the first embodiment. Referring to FIG. 7 along with FIGS. 4 to 6, the nozzle 20 according to the first embodiment may be inclined at a predetermined angle with respect to the normal direction of the lower surface of the frame 11. Accordingly, the flow of resin injected through the nozzle 20 has a predetermined horizontal velocity such that the injection of the resin is fast, the backflow of the resin is prevented, and the flow direction of the resin is predicted and controlled.

According to the first embodiment, the nozzle 20 may be inclined toward the first short side of the battery module 1. Accordingly, the flow of resin injected through the nozzle 20 is parallel to the extending direction of the long side of the battery module 1.

Specifically, the resin from the nozzle 20 may be injected into the injection hole 110 provided near the first short side of the frame 11 and flow toward the second short side of the frame 11.

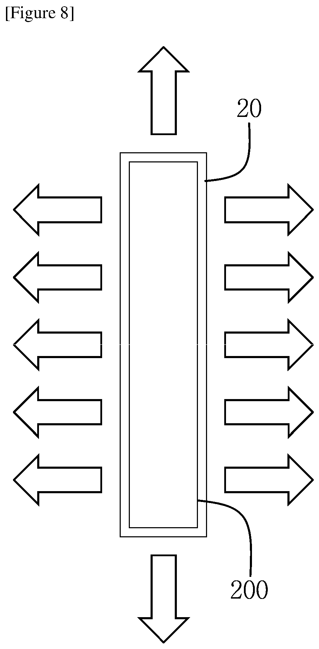

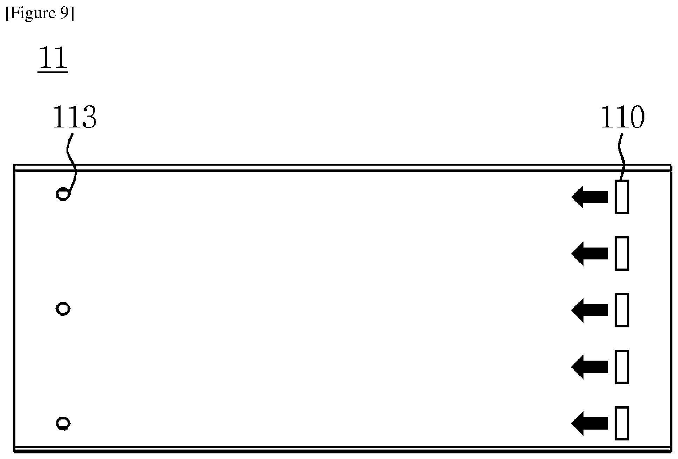

FIG. 8 illustrates a flow rate of resin per direction according to a shape of a nozzle hole of the first embodiment, and FIG. 9 illustrates a flow of resin according to the shape of the nozzle hole of the first embodiment. Referring back to FIG. 4 along with FIGS. 8 and 9, the nozzle hole 200 according to the first embodiment may have a long side and a short side.

Here, the extending direction of the long side of the nozzle hole 200 may intersect with that of the long side of the battery module 1, and the extending direction of the short side of the nozzle hole 200 may intersect with that of the short side of the battery module 1. That is, the nozzle hole 200 may extend in a direction intersecting the extending direction of the battery module 1. Apparently, the injection hole 110 may have a shape corresponding to the nozzle hole 200.

Since the nozzle hole 200 has such an elongated shape, the resin flowing out of the nozzle hole 200 may have a larger flow rate in the extending direction of the long side of the battery module 1 than in the extending direction of the short side of the battery module 1. This is true even when the resin is injected with a uniform pressure and velocity in the entire horizontal direction. However, this is even more true when the resin is injected with a larger velocity in the horizontal direction parallel to the extending direction of the long side of the battery module 1 as in the first embodiment.

According to the first embodiment, due to the inclination of the nozzle 20 and the shape of the nozzle hole 200, the resin injected near the first short side of the frame 11 may flow at a higher velocity and flow rate toward the second short side of the frame 11 and fill the inside of the frame 11.

The angle of the nozzle and the shape of the nozzle hole according to the first embodiment are independent elements of the present invention despite a synergistic effect thereof when combined with each other. That is, the purpose of the present invention may be partially or completely achieved with only one of the angle of the nozzle and the shape of the nozzle hole. Therefore, a resin injection apparatus having only one of the angle of the nozzle and the shape of the nozzle hole specified in the first embodiment should also be considered as an embodiment of the present invention.

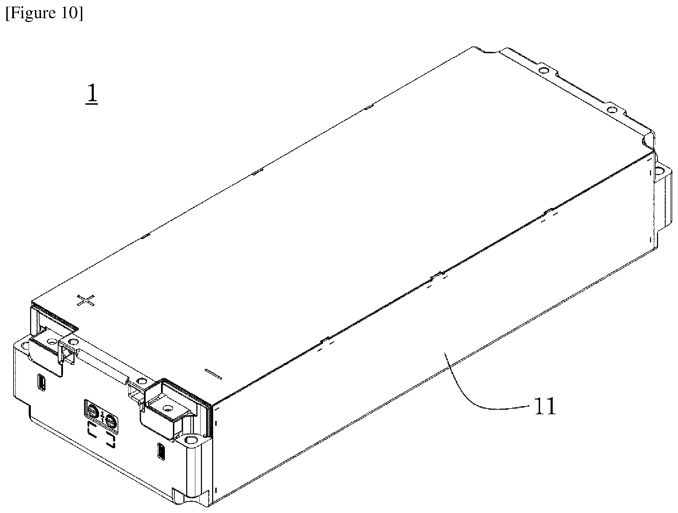

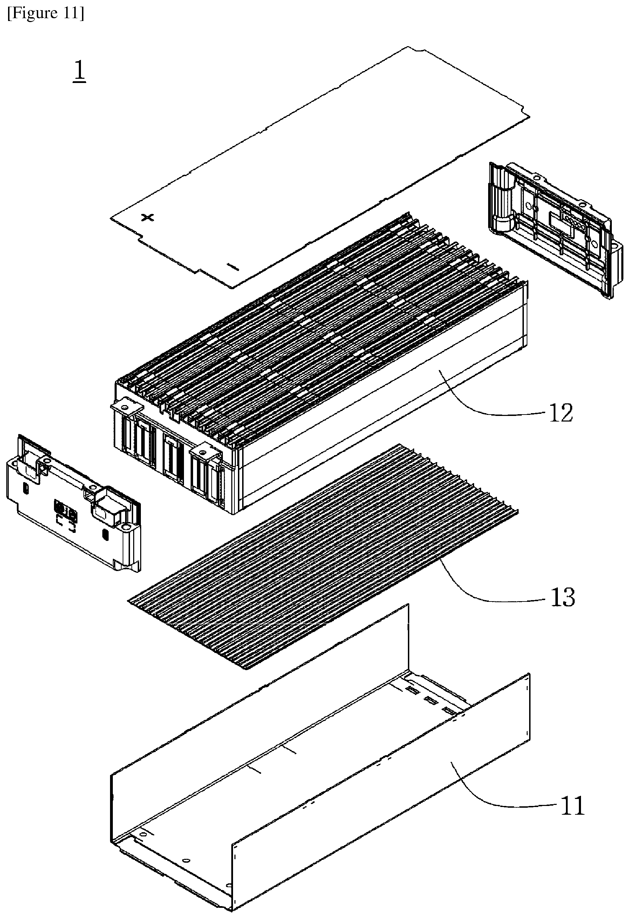

FIGS. 10 and 11 illustrate a structure of a battery module to which the resin injection apparatus according to a second embodiment is applied. Referring to FIGS. 10 and 11, the battery module 1 according to the first embodiment may include the frame 11 having an open upper end, a battery cell 12 accommodated in the frame 11, and the resin 13 filling the space between the bottom surface of the frame 11 and the lower surface of the battery cell 12 to adhesively fix the frame 11 to the battery cell 12.

While the frame 11 may constitute a housing surrounding the battery cell 12 together with one or more other members, the frame 11 is only required to have a lower surface on which the injection hole 110 is provided, and the structure or shape is not specifically limited thereto.

The battery cell 12 may be a plurality of stacked pouch-type battery cells. However, the structure and shape thereof are not specifically limited thereto.

The injection hole 110 according to the first embodiment may have a long side and a short side.

Here, the extending direction of the long side of the injection hole 110 may intersect with that of the long side of the battery module 1, and the extending direction of the short side of the injection hole 110 may intersect with that of the short side of the battery module 1. That is, the injection hole 110 may extend in a direction intersecting with the extending direction of the battery module 1.

Since the injection hole 110 has such an elongated shape, the resin flowing in through the injection hole 110 may have a larger flow rate in the extending direction of the long side of the battery module 1 than in the extending direction of the short side of the battery module 1. This is true even when the resin is injected with a uniform pressure and velocity in the entire horizontal direction. However, this is even more true when the resin is injected with a larger velocity in the horizontal direction parallel to the extending direction of the long side of the battery module 1 as in the first embodiment.

According to the first embodiment, due to the inclination of the nozzle 20, the shape of the nozzle hole 200, and the shape of the injection hole 110, the resin injected near the first short side of the frame 11 may flow with a greater velocity and flow rate toward the second short side of the frame 11 and fill the space inside the frame 11.

According to the first embodiment, the battery module 1 may further include a checking hole 113. The checking hole 113 may be open or transparent such that the inside of the battery module 1 may be viewed. By inspecting whether the resin has reached the checking hole 113, it may be confirmed that the resin fills the space in the battery module 1.

According to the first embodiment, the injection hole 110 may be provided so as to be offset to a first side with respect to a center of the lower surface along an extending direction of the long side of the battery module, and the checking hole 113 may be provided so as to be offset to a second side with respect to the center of the lower surface along the extending direction of the long side of the battery module. That is, the injection hole 110 may be provided near the first short side of the frame 11, and the checking hole 113 may be provided near the second short side of the frame 11. In such case, by inspecting the checking hole 113, it may be confirmed whether the resin uniformly fills the battery module.

### [SECOND EMBODIMENT]

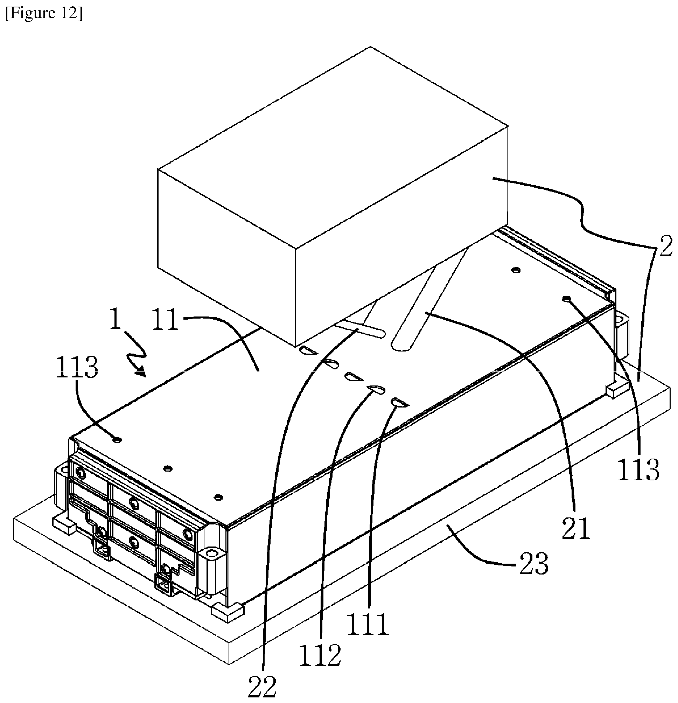

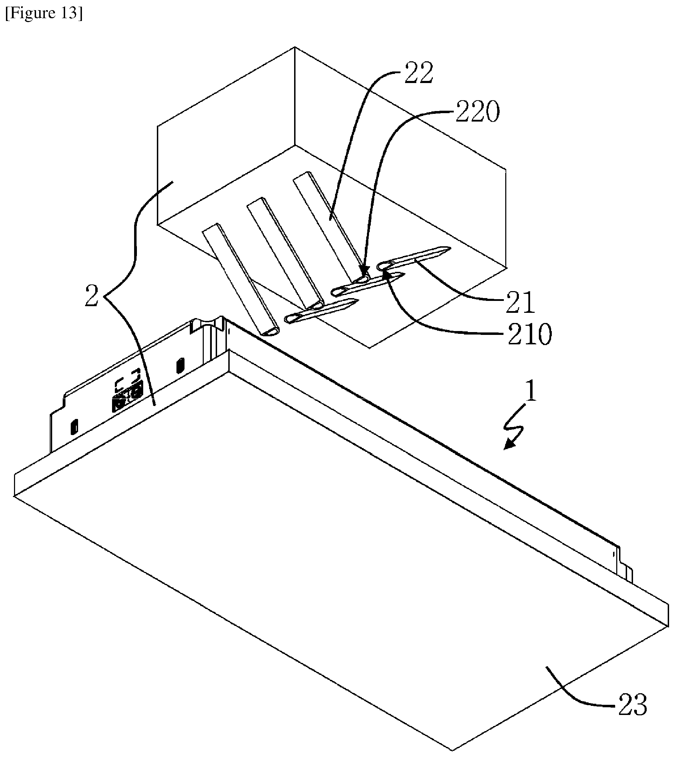

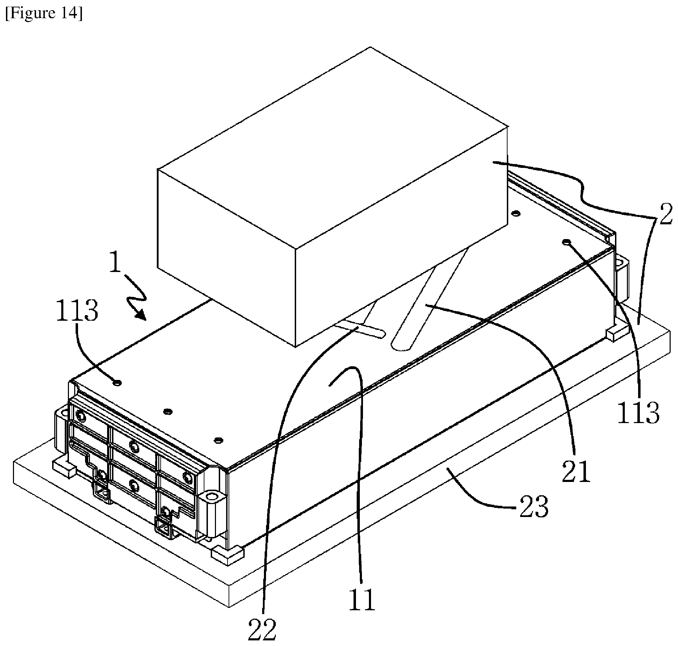

FIGS. 12 and 13 illustrate a nozzle of the resin injection apparatus before descending, and FIG. 14 illustrates the nozzle after descending according to a second embodiment. Referring to FIGS. 12 to 14, the resin injection apparatus 2 according to the second embodiment includes a nozzle 20 for injecting a resin into the frame 11 of the battery module 1 and a mount 23 for supporting the battery module 1.

The battery module 1 may have a long side and a short side in the horizontal direction.

The mount 23 may support the battery module 1 such that the battery module 1 may have an accurate relative position with respect to the nozzle 20. Here, the battery module 1 may be mounted on the mount 23 in a manner that the lower surface of the frame 11 faces upward, and thus, resin may be injected between the bottom surface of the frame 11 and the battery cell accommodated in the frame 11.

The nozzle 20 has a nozzle hole 200 at one end thereof for discharging resin.

The nozzle 20 may move up and down. As the nozzle 20 is lowered, the nozzle hole 200 may be engaged with the injection hole 110 provided in the frame 11. Thereafter, the nozzle 20 may discharge the resin through the nozzle hole 200, and the resin may be injected into the frame 11 through the injection hole 110.

According to the second embodiment, the nozzle 20 may include: a first nozzle 21 inclined with respect to the long side toward a first short side of the battery module 1; and a second nozzle 22 inclined with respect to the long side toward a second short side of the battery module 1. Accordingly, the first nozzle 21 and the second nozzle 22 may generate resin flows in opposite directions along the extending direction of the long side of the battery module 1.

Here, the first nozzle 21 and the second nozzle 22 may move up and down together, and a first nozzle 21 hole provided in the first nozzle 21 and a second nozzle 22 provided in the second nozzle 22 may be engaged with the injection hole 110 when the first nozzle 21 and the second nozzle 22 are lowered.

Here, the injection hole 110 may include: a first injection hole 111 having a shape and position corresponding to the first nozzle hole 210; and a second injection hole 112 having a shape and position corresponding to the second nozzle hole 220.

A plurality of nozzles 20 may be provided. Specifically, the plurality of nozzles 20 may be arranged in the extending direction of the long side and/or the short side of the battery module 1. Here, a plurality of nozzle holes 200 and a plurality of injection holes 110 may also be provided similar to the nozzle 20.

Specifically, a plurality of first nozzles 21 and a plurality of second nozzles 22 may be provided. Accordingly, a plurality of corresponding first nozzle holes 210 and a plurality of corresponding second nozzle holes 220, and a plurality of corresponding first injection holes 111 and a plurality of corresponding second injection holes 112 may also each be provided.

According to the second embodiment, the plurality of injection holes 110 may be provided with the plurality of the first injection holes 111 and the plurality of second injection holes 112 alternately arranged along the center line of the frame 11 parallel to the extending direction of the short side, and the plurality of nozzle 20 may also be provided with the plurality of the first nozzles 21 and the plurality of second nozzles 22 alternately arranged with such that the plurality of nozzle holes 200 corresponds to the plurality of injection holes 110.

According to the second embodiment, the resin may be injected from the center of the battery module 1 toward the two short sides of the battery module 1 to flow along the extending direction of the long side.

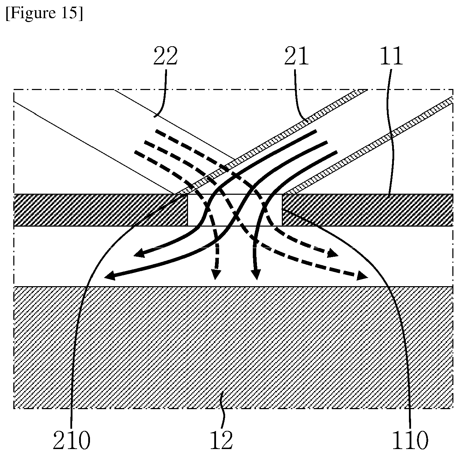

FIG. 15 illustrates a flow of resin according to a nozzle angle of the second embodiment. Referring to FIG. 15 along with FIGS. 12 to 14, the nozzle 20 according to the second embodiment may be inclined at a predetermined angle with respect to the normal direction of the lower surface of the frame 11. Accordingly, the flow of resin injected through the nozzle 20 has a predetermined horizontal velocity such that the injection of the resin is fast, the backflow of the resin is prevented, and the flow direction of the resin is predicted and controlled.

According to the second embodiment, the first nozzle 21 is inclined toward the first short side of the battery module 1, and the second nozzle 22 may be inclined toward the second short side of the battery module 1. Accordingly, the flow of the resin injected through the first nozzle 21 and the second nozzle 22 has velocities in opposite direction along the extending direction of the long side of the battery module 1.

Specifically, the resin from the nozzle 20 may be injected into the injection hole 110 provided at the center line of the frame 11 parallel to the extending direction of the short side to flow toward the second short side of the frame 11. Here, since the first nozzle 21 and the second nozzle 22 are alternately arranged and spaced apart from each other in the extending direction of the short side of the battery module 1, interference between the flow of the resin injected through the first nozzle 21 and the flow of the resin injected through the second nozzle 22 is minimized.

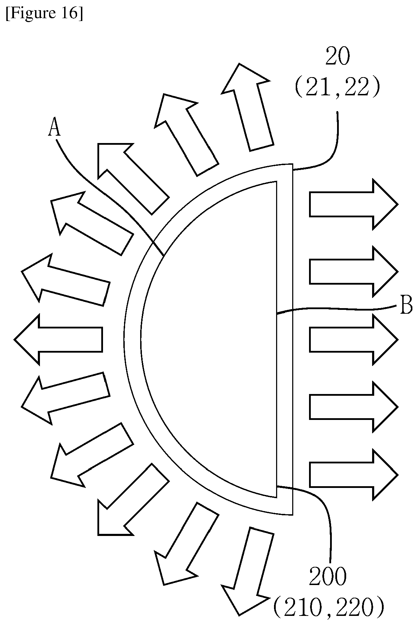

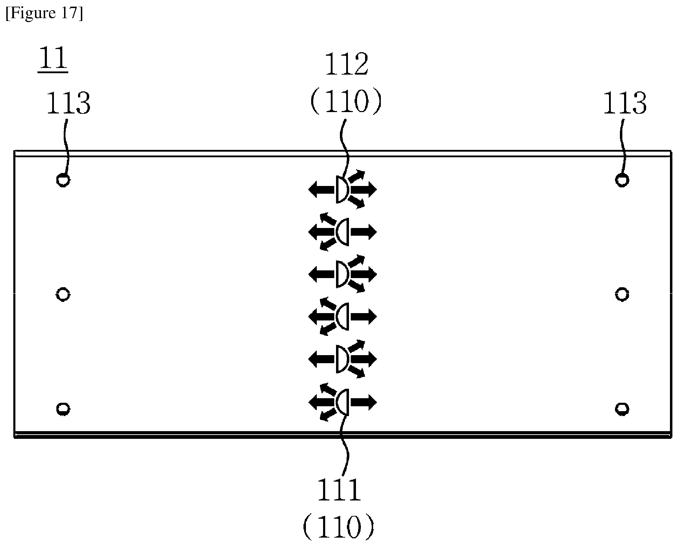

FIG. 16 illustrates a flow rate of resin per direction according to a shape of a nozzle hole of the second embodiment, and FIG. 17 illustrates a flow of resin according to the shape of the nozzle hole of the second embodiment. Referring back to FIG. 12 along with FIGS. 16 and 17, the nozzle hole 200 according to the second embodiment may have a long side and a short side.

Here, the extending direction of the long side of the nozzle hole 200 may intersect with that of the long side of the battery module 1, and the extending direction of the short side of the nozzle hole 200 may intersect with that of the short side of the battery module 1. That is, the nozzle hole 200 may extend in a direction intersecting the extending direction of the battery module 1. Apparently, the injection hole 110 may have a shape corresponding to the nozzle hole 200.

Since the nozzle hole 200 has such an elongated shape, the resin flowing out of the nozzle hole 200 may have a larger flow rate in the extending direction of the long side of the battery module 1 than in the extending direction of the short side of the battery module 1. This is true even when the resin is injected with a uniform pressure and velocity in the entire horizontal direction. However, this is even more true when the resin is injected with a larger velocity in the horizontal direction parallel to the extending direction of the long side of the battery module 1 as in the second embodiment.

In addition, according to the second embodiment of the present invention, the nozzle hole 200 has a semicircle shape with a straight portion B and a curved portion A. In such case, since the curved portion A is longer than the straight portion B, the flow rate of the resin flowing out of the nozzle hole 200 through the curved portion A is larger than that of the resin flowing out of the nozzle hole 200 through the straight portion B.

This is true even when the resin is injected with a uniform pressure and velocity in the entire horizontal direction. However, this is even more true when the resin is injected with a larger velocity in the horizontal direction parallel to the extending direction of the long side of the battery module 1 as in the second embodiment.

According to the second embodiment, by setting the distribution of the flow rate of the resin injected into the injection hole according to the direction, the resin may be injected more predictably and fill the space in the battery module more uniformly.

Here, the straight portion B of the first nozzle hole 210 may face the first short side of the battery module 1 opposite to the curved portion A of the first nozzle hole 210, and the straight portion B of the second nozzle hole 220 may face the second short side of the battery module 1 opposite to the curved portion A of the second nozzle hole 220. Accordingly, the main flows of the resin passing through the first nozzle hole 210 and the resin passing through the second nozzle hole 220 may be in opposite directions along the extending direction of the long side of the battery module 1.

For both the first nozzle hole 210 and the second nozzle hole 220, it is preferable that the direction the straight portion A of the nozzle hole 200 faces coincides with the direction in which the nozzle 20 is inclined.

According to the second embodiment, due to the inclination of the nozzle 20 and the shape of the nozzle hole 200, the resin injected through the center of the frame 11may flow at a higher velocity and flow rate toward the two short sides of the frame 11 and fill the inside of the frame 11.

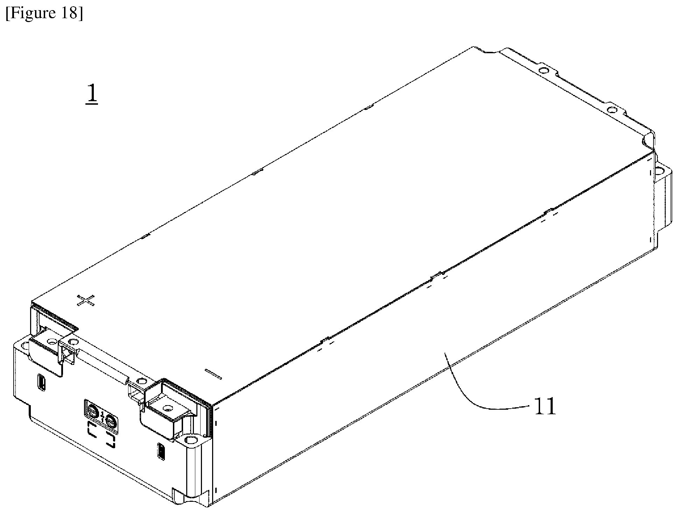

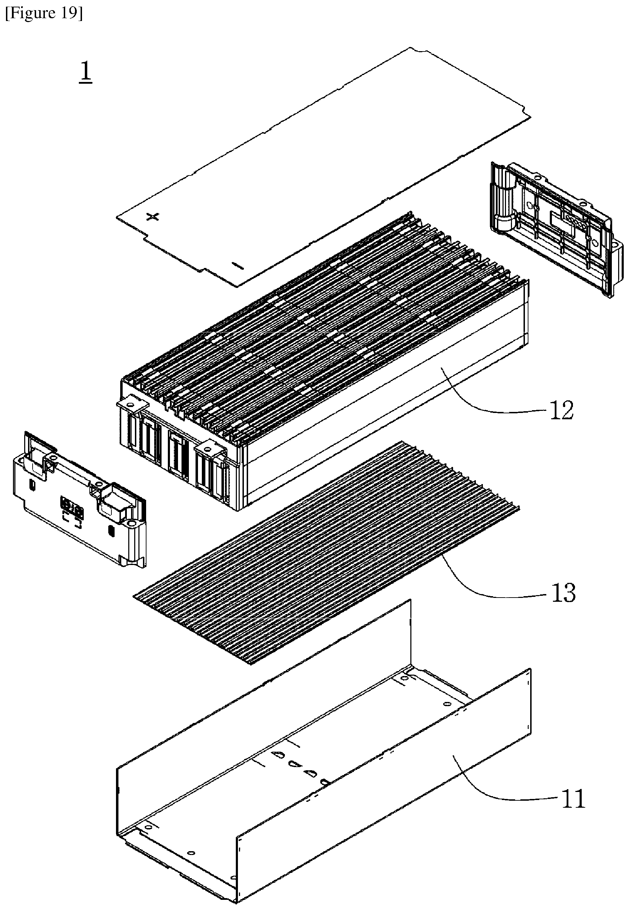

FIGS. 18 and 19 illustrate a structure of a battery module to which the resin injection apparatus according to the second embodiment is applied. Referring to FIGS. 18 and 19, the battery module 1 according to the second embodiment may include the frame 11 having an open upper end, a battery cell 12 accommodated in the frame 11, and the resin 13 filling the space between the bottom surface of the frame 11 and the lower surface of the battery cell 12 to adhesively fix the frame 11 to the battery cell 12.

While the frame 11 may constitute a housing surrounding the battery cell 12 together with one or more other members, the frame 11 is only required to have a lower surface on which the injection hole 110 is provided, and the structure or shape is not specifically limited thereto.

The battery cell 12 may be a plurality of stacked pouch-type battery cells. However, the structure and shape thereof are not specifically limited thereto.

The injection hole 110 according to the second embodiment may have a long side and a short side.

Here, the extending direction of the long side of the injection hole 110 may intersect with that of the long side of the battery module 1, and the extending direction of the short side of the injection hole 110 may intersect with that of the short side of the battery module 1. That is, the injection hole 110 may extend in a direction intersecting with the extending direction of the battery module 1.

Since the injection hole 110 has such an elongated shape, the resin flowing in through the injection hole 110 may have a larger flow rate in the extending direction of the long side of the battery module 1 than in the extending direction of the short side of the battery module 1. This is true even when the resin is injected with a uniform pressure and velocity in the entire horizontal direction. However, this is even more true when the resin is injected with a larger velocity in the horizontal direction parallel to the extending direction of the long side of the battery module 1 as in the second embodiment.

In addition, according to the second embodiment, the injection hole 100 has a semicircle shape with a straight portion and a curved portion. In such case, since the curved portion is longer than the straight portion, the flow rate of the resin flowing in from the injection hole 100 through the curved portion is larger than that of the resin flowing in from the injection hole 100 through the straight portion.

This is true even when the resin is injected with a uniform pressure and velocity in the entire horizontal direction. However, this is even more true when the resin is injected with a larger velocity in the horizontal direction parallel to the extending direction of the long side of the battery module 1 as in the second embodiment.

According to the second embodiment, by setting the distribution of the flow rate of the resin injected into the injection hole according to the direction, the resin may be injected more predictably and fill the space in the battery module more uniformly.

Here, the straight portion of the first injection hole 111 may face the first short side of the battery module 1 opposite to the curved portion of the first injection hole 111, and the straight portion of the second injection hole 112 may face the second short side of the battery module 1 opposite to the curved portion of the second injection hole 112. Accordingly, the main flows of the resin passing through the first injection hole 111 and the resin passing through the second injection hole 112 may be in opposite directions along the extending direction of the long side of the battery module 1.

For both the first injection hole 111 and the second injection hole 112, it is preferable that the direction the straight portion of the injection hole 110 faces coincides with the direction in which the nozzle 20 is inclined.

According to the second embodiment, due to the inclination of the nozzle 20, the shape of the nozzle hole 200, and the shape of the injection hole 110, the resin injected to the center of the frame 11 may flow with a greater velocity and flow rate toward two short sides of the frame 11 and fill the space inside the frame 11.

According to the second embodiment, the battery module 1 may further include a checking hole 113. The checking hole 113 may be open or transparent such that the inside of the battery module 1 may be viewed. By inspecting whether the resin has reached the checking hole 113, it may be confirmed that the resin fills the space in the battery module 1.

According to the second embodiment, the checking hole 113 may be provided near the two short sides of the lower surface of the battery module 1. In such case, by inspecting the checking hole 113, it may be confirmed whether the resin uniformly fills the battery module.

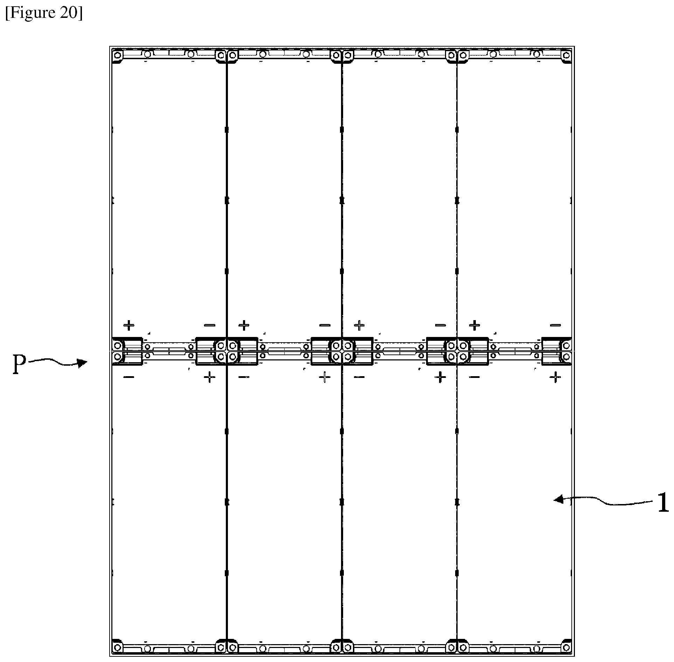

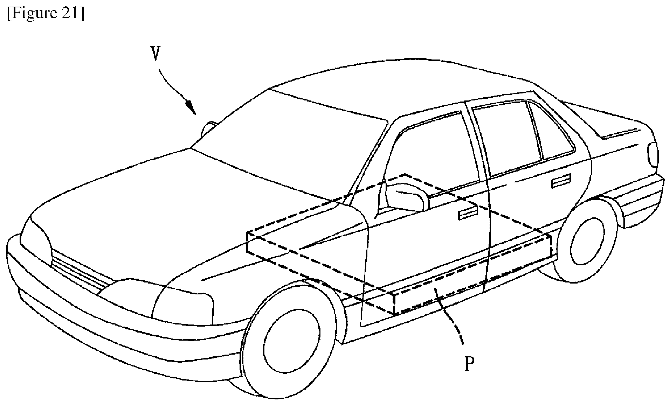

FIGS. 20 and 21 illustrate a battery pack accommodating a battery module and a vehicle including the battery pack according to an embodiment of the present invention, respectively. Referring to FIGS. 13 and 14, a plurality of battery modules 1 may be integrated into a battery pack P to increase the capacity and/or voltage thereof. The battery pack P may include an exhaust device capable of discharging gases and flames emitted when the battery module 1 ignites. The battery pack P may be built into a vehicle V as a power source. The vehicle V may include an electric vehicle, a hybrid vehicle, etc.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A resin injection apparatus for injecting a resin into a battery module having a long side and a short side in horizontal direction and an injection hole provided on a lower surface thereof, the resin injection apparatus comprising:
a mount where the battery module is mounted in inverted state; and
a nozzle provided with a nozzle hole at a front end thereof, the nozzle supplying the resin to the battery module through the injection hole while the nozzle hole is engaged with the injection hole,
wherein the nozzle extends at a predetermined angle with respect to a normal direction of the lower surface of the battery module.

2. The resin injection apparatus of claim 1, wherein the nozzle is capable of moving up and down, and
the nozzle hole is engaged with the injection hole when the nozzle is lowered.

3. The resin injection apparatus of claim 1, wherein a plurality of nozzles are arranged along an extending direction of the short side of the battery module.

4. The resin injection apparatus of claim 1, wherein the nozzle is inclined with respect to the long side toward a first short side of the battery module.

5. The resin injection apparatus of claim 4, wherein the nozzle hole has a long side and a short side,
an extending direction of the long side of the nozzle hole intersects with that of the long side of the battery module, and
an extending direction of the short side of the nozzle hole intersects with that of the short side of the battery module.

6. The resin injection apparatus of claim 1, wherein the nozzle comprises:
a first nozzle inclined with respect to the long side toward a first short side of the battery module; and
a second nozzle inclined toward a second short side of the battery module;
wherein the first nozzle and the second nozzle are capable of moving up and down together, and
a first nozzle hole provided in the first nozzle and a second nozzle provided in the second nozzle are engaged with the injection hole when the first nozzle and the second nozzle are lowered.

7. The resin injection apparatus of claim 6, wherein the first nozzle and the second nozzle are alternately arranged along an extending direction of the short side of the battery module.

8. The resin injection apparatus of claim 6, wherein the first nozzle hole provided in the first nozzle and the second nozzle provided in the second nozzle are arranged along a center line of the battery module parallel to the extending direction of the short side.

9. The resin injection apparatus of claim 6, wherein the nozzle hole has a long side and a short side,
an extending direction of the long side of the nozzle hole intersects with that of the long side of the battery module, and
an extending direction of the short side of the nozzle hole intersects with that of the short side of the battery module.

10. The resin injection apparatus of claim 6, wherein the nozzle hole has a semicircle shape with a straight portion and a curved portion,
a straight portion of the first nozzle hole faces the first short side of the battery module opposite to a curved portion of the first nozzle hole, and
a straight portion of the second nozzle hole faces the second short side of the battery module opposite to the curved portion of the second nozzle hole.

11. A resin injection apparatus for injecting a resin into a battery module having a long side and a short side in horizontal direction and an injection hole provided on a lower surface thereof, the resin injection apparatus comprising:
a mount where the battery module is mounted in inverted state; and
a nozzle provided with a nozzle hole at a front end thereof, the nozzle supplying the resin to the battery module through the injection hole while the nozzle hole is engaged with the injection hole,
wherein the nozzle hole has a long side and a short side,
an extending direction of the long side of the nozzle hole intersects with that of the long side of the battery module, and
an extending direction of the short side of the nozzle hole intersects with that of the short side of the battery module.

12. The resin injection apparatus of claim 11, wherein the nozzle is capable of moving up and down, and
the nozzle hole is engaged with the injection hole when the nozzle is lowered.

13. The resin injection apparatus of claim 11, wherein a plurality of nozzles are arranged along an extending direction of the short side of the battery module.

14. The resin injection apparatus of claim 11, wherein the nozzle extends at a predetermined angle with respect to a normal direction of the lower surface of the battery module.

15. The resin injection apparatus of claim 14, wherein the nozzle is inclined with respect to the long side toward a first short side of the battery module.

16. The resin injection apparatus of claim 14, wherein the nozzle comprises:
a first nozzle inclined with respect to the long side toward a first short side of the battery module; and
a second nozzle inclined toward a second short side of the battery module;
wherein the first nozzle and the second nozzle are capable of moving up and down together, and
a first nozzle hole provided in the first nozzle and a second nozzle provided in the second nozzle are engaged with the injection hole when the first nozzle and the second nozzle are lowered.

17. The resin injection apparatus of claim 16, wherein the first nozzle and the second nozzle are alternately arranged along an extending direction of the short side of the battery module.

18. The resin injection apparatus of claim 16, wherein the first nozzle hole provided in the first nozzle and the second nozzle provided in the second nozzle are arranged along a center line of the battery module parallel to the extending direction of the short side.

19. The resin injection apparatus of claim 11, wherein the nozzle hole has a semicircle shape with a straight portion and a curved portion,
the nozzle comprises a first nozzle provided with a first nozzle hole and a second nozzle provided with a second nozzle hole
the first nozzle and the second nozzle are alternately arranged along an extending direction of the short side of the battery module.
a straight portion of the first nozzle hole faces the first short side of the battery module opposite to a curved portion of the first nozzle hole, and
a straight portion of the second nozzle hole faces the second short side of the battery module opposite to the curved portion of the second nozzle hole.

20. The resin injection apparatus of claim 19, wherein the first nozzle and the second nozzle are capable of moving up and down together, and
a first nozzle hole provided in the first nozzle and a second nozzle provided in the second nozzle are engaged with the injection hole when the first nozzle and the second nozzle are lowered.

21. A battery module having a long side and a short side in horizontal direction and comprising an injection hole provided on a lower surface thereof,
wherein the injection hole has a long side and a short side,
an extending direction of the long side of the injection hole intersects with that of the long side of the battery module, and
an extending direction of the short side of the injection hole intersects with that of the short side of the battery module.

22. The battery module of claim 21, wherein further comprising a checking hole,
wherein the injection hole is provided so as to be offset to a first side with respect to a center of the lower surface along an extending direction of the long side of the battery module, and
the checking hole is provided so as to be offset to a second side with respect to the center of the lower surface along the extending direction of the long side of the battery module.

23. The battery module of claim 21, wherein the injection hole has a semicircle shape with a straight portion and a curved portion,
the injection hole comprising:
a first injection hole having a curved portion and a straight portion facing a first short side of the battery module opposite to the curved portion thereof; and
a second injection hole having a curved portion and a straight portion facing a second short side of the battery module opposite to the curved portion thereof.

24. The battery module of claim 23, wherein the first injection hole and the second injection hole are arranged along a center line of the battery module parallel to the extending direction of the short side of the battery module.

25. The resin injection apparatus of claim 24, wherein further comprising a pair of checking holes provided at two short sides of the lower surface of the battery module, respectively.
